# EUROPÄISCHE PATENTANMELDUNG

(11) **EP 0 817 446 A2**
(43) Veröffentlichungstag der Anmeldung: **07.01.1998**
(21) Anmeldenummer: 97110595.2
(22) Anmeldetag: 27.06.1997
(51) Int. Cl.: H04M 1/00, H04M 1/02

(54) **Schalteinrichtung für Fernsprechapparate**

(30) Priorität: 27.06.1996 DE 29611275 U
(71) Anmelder: SIEMENS AKTIENGESELLSCHAFT, 80333 München (DE)
(72) Erfinder: Dafcik, Juan, Dipl.-Ing., 85375 Neufahrn (DE)

(57) **Zusammenfassung**

Ein Tastenkörper ist aus einer vorgegebenen Ruheposition heraus mittels einer Schiebebewegung in zwei entgegengesetzt liegende Endpositionen verschiebbar und sowohl in der Ruheposition als auch in den beiden Endpositionen eindrückbar, wobei in den beiden Endpositionen jeweils ein erster bzw. zweiter Kontakt geschlossen und beim Eindrücken des Tastenkörpers ein dritter Kontakt geschlossen wird.

## Beschreibung

Die Anwenderfreundlichkeit eines Fernsprechapparates, insbesondere die eines Mobilfunkgerätes, d. h. eines sogenannten Handys, wird von der Ergonomie und der Funktionalität der Tasten, mit denen der Fernsprechapparat bedient wird, beeinflußt, da die Tasten ein Grundelement für die Bedienung des Fernsprechapparates sind.

So sind heute Mehrfunktionstasten bekannt, welche je nach Betriebszustand eines Handys z. B. sowohl für die Menuesteuerung als auch für die Lautstärkeregelung verwendet werden. Jedoch existiert bei den bekannten Lösungen neben diesen Mehrfunktionstasten gleichzeitig eine Bestätigungstaste zur Bestätigung der durch die Mehrfunktionstaste ausgewählten Funktion. Zur abschließenden Auswahl einer Funktion ist daher immer die Betätigung zweier Tasten notwendig.

Dies ist ein komplizierter Vorgang für den Benutzer, da er sich beim Einstellen eines Funktionsmerkmals zweier Tasten bedienen muß.

Darüberhinaus ist der Platz für Tasten zur Einleitung von irgendwelchen zusätzlichen Leistungsmerkmalen auf dem Gehäuse eines Mobilfunkgerätes sehr begrenzt.

Die Aufgabe der vorliegenden Erfindung besteht daher darin, eine Schalteinrichtung für Fernsprechapparate, insbesondere Mobilfunkgeräte, anzugeben, mit welcher die Anzahl der Tasten für die gleiche Menge von Leistungsmerkmalen gegenüber den herkömmlichen Geräten reduziert werden kann.

Diese Aufgabe wird erfindungsgemäß durch eine Schalteinrichtung gelöst, welche gekennzeichnet ist durch durch einen Tastenkörper, der aus einer vorgegebenen Ruheposition heraus mittels einer Schiebebewegung in zwei entgegengesetzt liegende Endpositionen verschiebbar ist und sowohl in der Ruheposition als auch in den beiden Endpositionen eindrückbar ist, wobei in den beiden Endpositionen jeweils ein erster bzw. zweiter Kontakt geschlossen und beim Eindrücken des Tastenkörpers ein dritter Kontakt geschlossen wird.

Bei der erfindungsgemäßen Lösung benötigt der Benutzer lediglich eine Taste, um eine bestimmte Funktion auszuwählen und zu bestätigen.

Eine zweckmäßige Ausgestaltung der vorliegenden Erfindung ist dadurch gekennzeichnet, daß der Tastenkörper einem Schiebeschalter zugeordnet ist, der fest mit der Bedienfläche eines Drucktasters verbunden ist. Auf diese Weise ergibt sich eine Ausführung der Erfindung, die einfach herzustellen ist.

Die Erfindung wird nachfolgend anhand eines in der Zeichnung dargestellten Ausführungsbeispiels näher beschrieben.

Es zeigen
- FIG 1: eine teilweise perspektivische Darstellung eines Mobilfunkgerätes mit einer erfindungsgemäßen Schalteinrichtung, und
- FIG 2: eine beispielhafte Ausführung einer Schalteinrichtung gemäß der vorliegenden Erfindung.

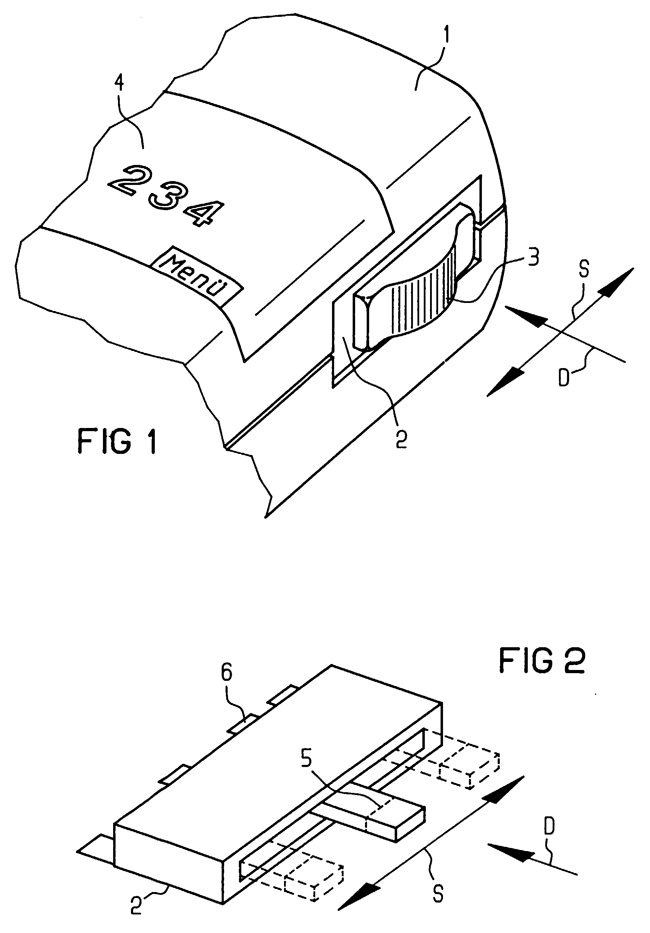

FIG 1 zeigt den Teil eines Handys 1 in perspektivischer Darstellung, welcher die erfindungsgemäße Schalteinrichtung 2 enthält. Diese Schalteinrichtung 2 kann z. B., wie in FIG 1 dargestellt ist, im oberen Seitenbereich in Höhe des Displays 4 angeordnet sein.

Die mit 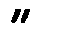 S 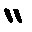 und 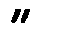 D 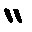 gekennzeichneten Pfeile bezeichnen jeweils die Schieberichtung und die Druckrichtung für die Betätigung der Schalteinrichtung 2.

FIG 2 stellt ein Ausführungsbeispiel der erfindungsgemäßen Schalteinrichtung 2 dar. Die Schalteinrichtung 2 kann z. B. im wesentlichen aus einem Schiebeschalter und einem Drucktaster bestehen, wobei der Schiebeschalter fest mit der Bedienfläche des Drucktasters verbunden ist. Dabei können beide Schalteinrichtungen, wie in FIG 2 gezeigt ist, in einem gemeinsamen Gehäuse untergebracht sein. Auf einer Seite dieses Gehäuses ragt ein Steg 5 zur Aufnahme des Tastenkörpers 3 heraus, auf der gegenüberliegenden Seite befinden sich die Kontaktanschlüsse 6.

In FIG 2 sind die verschiedenen Stellungen des Stegs 5 und damit auch des Tastenkörpers 3 angedeutet. Dabei stellt die mittlere, nicht eingedrückte Stellung die Ruheposition dar. Aus dieser Ruheposition heraus kann der Tastenkörper nach oben oder unten bewegt werden, um jeweils einen Kontakt zu schließen.

Diese beiden Kontakte des Schiebeschalters können zum Beispiel dazu dienen, um in einem Menue eine Auswahl mittels Suchen in einer bestimmten Richtung durchzuführen.

In der jeweiligen Endposition des Schiebeschalters kann dann der Tastenkörper gedrückt werden, um den Drucktaster zu betätigen und dadurch einen dritten Kontakt zu schließen.

Dieser dritte Kontakt kann dann für eine Bestätigung der über den Schiebeschalter ausgesuchten Funktion verwendet werden.

Dabei ist es zweckmäßig, die Schalteinrichtung 2 so auszulegen, daß daß der Tastenkörper 3 nur im nicht gedrückten Zustand in die beiden Endpositionen verschoben werden kann.

Bei der erfindungsgemäßen Schalteinrichtung kann der Benutzer somit mit Hilfe nur einer Taste sowohl eine Funktion aussuchen als auch die ausgesuchte Funktion bestätigen.

## Patentansprüche

1. Schalteinrichtung für Fernsprechapparate, insbesondere Mobilfunkgeräte,
gekennzeichnet durch
einen Tastenkörper (3), der aus einer vorgegebenen Ruheposition heraus mittels einer Schiebebewegung in zwei entgegengesetzt liegende Endpositionen verschiebbar ist und sowohl in der Ruheposition als auch in den beiden Endpositionen eindrückbar ist, wobei in den beiden Endpositionen jeweils ein erster bzw. zweiter Kontakt geschlossen und beim Eindrücken des Tastenkörpers (3) ein dritter Kontakt geschlossen wird.

2. Schalteinrichtung nach Anspruch 1,
dadurch gekennzeichnet,
daß der Tastenkörper (3) einem Schiebeschalter zugeordnet ist, der fest mit der Bedienfläche eines Drucktasters verbunden ist.

3. Schalteinrichtung nach Anspruch 1 oder 2,
dadurch gekennzeichnet,
daß der Tastenkörper (3) nur im nicht gedrückten Zustand in die Endpositionen verschiebbar ist.
